# EUROPEAN PATENT APPLICATION

(11) **EP 4 518 490 A1**
(43) Date of publication of application: **05.03.2025**
(21) Application number: 23795177.7
(22) Date of filing: 20.04.2023
(51) Int. Cl.: H04W 72/04

(54) **RESOURCE SCHEDULING METHOD, DEVICE, APPARATUS, AND STORAGE MEDIUM**

(30) Priority: 29.04.2022 CN 202210474699
(71) Applicant: Datang Mobile Communications Equipment Co., Ltd., Beijing 100085 (CN)
(72) Inventor: ZHANG, Huiying, Beijing 100085 (CN); LI, Jianxiang, Beijing 100085 (CN)
(74) Representative: Studio Torta S.p.A.
(86) International application number: PCT/CN2023/089450
(87) International publication number: WO 2023/207744

(57) **Abstract**

Embodiments of the present invention provide a resource scheduling method, a device, an apparatus, and a storage medium. The method is applied to a first terminal, and comprises: acquiring first information, wherein the first information is used for a first network device to schedule a transmission resource of the first terminal; and sending a first message to the first network device, wherein the first message is used for indicating the first information. Thus, according to the indicated first information, the first network device can avoid scheduling, on time-frequency resources or time-domain resources used for receiving SL PRS, SL transmission resources and/or air interface transmission resources of the first terminal; thus, the problem of data packet loss or failure to send caused by the terminal performing SL PRS signal measurement and data transmission at the same time can be avoided, thereby ensuring the success rate of data transmission.

## Description

### CROSS-REFERENCES TO RELATED APPLICATIONS

The present application claims priority to Chinese patent application No. 202210474699.X filed on April 29, 2022, entitled "Resource Scheduling Method, Device, Apparatus, and Storage Medium", which is hereby incorporated by reference in its entirety.

### FIELD

The present application relates to the field of radio communication, and in particular, to methods and apparatuses for resource scheduling, devices and a storage medium.

### BACKGROUND

Direct communication refers to a way in which neighboring terminals (also known as user equipments (UEs)) may perform data transmission within a close range through a direct communication link (sidelink (SL), or also known as proximity communication port 5 (PC5)). The radio interface corresponding to the direct communication link is referred as to a direct communication interface, also known as a sidelink interface, a SL interface, or a PC5 interface.

In the related art, there are two modes for determining transmission resources used by the terminal with SL interface to communicate with other terminals or network devices: a base station scheduling mode and a terminal autonomous selection mode. For the base station scheduling mode, the transmission resources for the terminal are determined by the base station and are notified to the terminal through a downlink signaling.

In some scenarios, such as when the terminals use sidelink for positioning between each other, the terminal that measures the sidelink positioning reference signal (SL PRS) cannot simultaneously send the sidelink or even cannot receive other sidelink channels, in case that the transmission resources scheduled by the base station are at the location of resources for receiving SL PRS by the terminal, it may lead to data packet loss or inability to send.

### BRIEF SUMMARY

In response to the problems in the related art, embodiments of the present application provide methods and apparatuses for resource scheduling, devices and a storage medium.

An embodiment of the present application provides a method for resource scheduling, performed by a first terminal, including:
obtaining first information, where the first information is used by a first network device to schedule transmission resources for the first terminal; and
sending a first message to the first network device, where the first message is used to indicate the first information.

In an embodiment, the first information includes resource information of a sidelink positioning reference signal (SL PRS) or configuration information for a sidelink measurement gap (SL MG) of a second terminal.

In an embodiment, obtaining the first information includes:
receiving the first information sent from a second terminal.

In an embodiment, the method further includes:
receiving configuration information for an SL MG of the first terminal sent from the first network device.

In an embodiment, in case that the first message is used to indicate the resource information of the SL PRS, the first message carries one or more pieces of the following information:
resource information of the SL PRS;
resource information identifier of the SL PRS;
sidelink identifier of the first terminal and/or the second terminal; or
indication information for indicating a reception of the SL PRS.

In an embodiment, the resource information of the SL PRS includes one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

In an embodiment, the configuration information for the SL MG of the second terminal includes one or more of the following:
a frequency point where the SL PRS locates;
a measurement period and offset of the SL PRS;
a measurement duration of the SL PRS; or
a measurement valid duration of the SL PRS.

In an embodiment, the first message includes any of the following:
a radio resource control message; or
a media access control-control element (MAC CE) message.

An embodiment of the present application further provides a method for resource scheduling, performed by a first network device, including:
receiving a first message sent from a first terminal, where the first message is used to indicate first information; and
scheduling transmission resources for the first terminal based on the first information.

In an embodiment, the first information includes resource information of a sidelink positioning reference signal (SL PRS) or configuration information for a sidelink measurement gap (SL MG) of a second terminal.

In an embodiment, scheduling transmission resources for the first terminal based on the first information includes:
scheduling transmission resources for the first terminal to send sidelink and/or perform air interface transmission based on the resource information of the SL PRS; or
scheduling transmission resources for the first terminal to send sidelink data to the second terminal based on the configuration information for the SL MG of the second terminal.

In an embodiment, scheduling transmission resources for the first terminal to send sidelink and/or perform air interface transmission based on the resource information of the SL PRS includes:
scheduling, based on the resource information of the SL PRS, resources other than time-frequency resources or time domain resources for receiving the SL PRS for the first terminal to send sidelink and/or perform air interface transmission.

In an embodiment, scheduling transmission resources for the first terminal to send sidelink and/or perform air interface transmission based on the resource information of the SL PRS includes:
determining configuration information for an SL MG of the first terminal based on the resource information of the SL PRS; and
scheduling resources outside a time range of the SL MG of the first terminal for the first terminal to send sidelink and/or perform air interface transmission.

In an embodiment, scheduling the transmission resources for the first terminal to send sidelink data to the second terminal based on the configuration information for the SL MG of the second terminal includes:
scheduling, based on the configuration information for the SL MG of the second terminal, resources outside a time range of the SL MG of the second terminal for the first terminal to send sidelink data to the second terminal.

In an embodiment, the method further includes:
determining configuration information for an SL MG of the first terminal based on the resource information of the SL PRS; and
sending the configuration information for the SL MG of the first terminal to the first terminal.

An embodiment of the present application further provides a method for resource scheduling, performed by a first terminal, including:
sending a second message to a first network device, where the second message is used to request resource information of a sidelink positioning reference signal (SL PRS).

In an embodiment, the second message carries one or more pieces of the following information:
sidelink identifier of the first terminal and/or a second terminal;
indication information for indicating a transmission of the SL PRS; or
configuration information for an SL MG of the second terminal.

In an embodiment, the second message includes any of the following:
a radio resource control message; or
a media access control-control element (MAC CE) message.

An embodiment of the present application further provides a method for resource scheduling, performed by a first network device, including:
receiving a second message sent from a first terminal, where the second message is used to request resource information of a sidelink positioning reference signal (SL PRS); and
scheduling transmission resources for the first terminal based on the second message.

In an embodiment, scheduling the transmission resources for the first terminal based on the second message includes:
determining the resource information of the SL PRS based on the second message; and
scheduling, based on the resource information of the SL PRS, resources other than time-frequency resources or time domain resources for receiving the SL PRS for the first terminal to send sidelink data to a second terminal.

An embodiment of the present application further provides a first terminal, including a memory, a transceiver and a processor,
where the memory is used for storing a computer program, the transceiver is used for receiving and sending data under control of the processor, and the processor is used for reading the computer program in the memory and performing the following operations:
obtaining first information, where the first information is used by a first network device to schedule transmission resources for the first terminal; and
sending a first message to the first network device, where the first message is used to indicate the first information.

In an embodiment, the first information includes resource information of a sidelink positioning reference signal (SL PRS) or configuration information for a sidelink measurement gap (SL MG) of a second terminal.

In an embodiment, obtaining the first information includes:
receiving the first information sent from a second terminal.

In an embodiment, the operation further includes:
receiving configuration information for an SL MG of the first terminal sent from the first network device.

In an embodiment, in case that the first message is used to indicate the resource information of the SL PRS, the first message carries one or more pieces of the following information:
resource information of the SL PRS;
resource information identifier of the SL PRS;
sidelink identifier of the first terminal and/or the second terminal; or
indication information for indicating a reception of the SL PRS.

In an embodiment, the resource information of the SL PRS includes one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

In an embodiment, the configuration information for the SL MG of the second terminal includes one or more of the following:
a frequency point where the SL PRS locates;
a measurement period and offset of the SL PRS;
a measurement duration of the SL PRS; or
a measurement valid duration of the SL PRS.

In an embodiment, the first message includes any of the following:
a radio resource control message; or
a media access control-control element (MAC CE) message.

An embodiment of the present application further provides a first network device, including a memory, a transceiver and a processor,
where the memory is used for storing a computer program, the transceiver is used for receiving and sending data under control of the processor, and the processor is used for reading the computer program in the memory and performing the following operations:
receiving a first message sent from a first terminal, where the first message is used to indicate first information; and
scheduling transmission resources for the first terminal based on the first information.

In an embodiment, the first information includes resource information of a sidelink positioning reference signal (SL PRS) or configuration information for a sidelink measurement gap (SL MG) of a second terminal.

In an embodiment, scheduling transmission resources for the first terminal based on the first information includes:
scheduling transmission resources for the first terminal to send sidelink and/or perform air interface transmission based on the resource information of the SL PRS; or
scheduling transmission resources for the first terminal to send sidelink data to the second terminal based on the configuration information for the SL MG of the second terminal.

In an embodiment, scheduling transmission resources for the first terminal to send sidelink and/or perform air interface transmission based on the resource information of the SL PRS includes:
scheduling, based on the resource information of the SL PRS, resources other than time-frequency resources or time domain resources for receiving the SL PRS for the first terminal to send sidelink and/or perform air interface transmission.

In an embodiment, scheduling transmission resources for the first terminal to send sidelink and/or perform air interface transmission based on the resource information of the SL PRS includes:
determining configuration information for an SL MG of the first terminal based on the resource information of the SL PRS; and
scheduling resources outside a time range of the SL MG of the first terminal for the first terminal to send sidelink and/or perform air interface transmission.

In an embodiment, the operation further includes:
determining configuration information for an SL MG of the first terminal based on the resource information of the SL PRS; and
sending the configuration information for the SL MG of the first terminal to the first terminal.

An embodiment of the present application further provides a first terminal, including a memory, a transceiver and a processor,
where the memory is used for storing a computer program, the transceiver is used for receiving and sending data under control of the processor, and the processor is used for reading the computer program in the memory and performing the following operations:
sending a second message to a first network device, where the second message is used to request resource information of a sidelink positioning reference signal (SL PRS).

In an embodiment, the second message carries one or more pieces of the following information:
sidelink identifier of the first terminal and/or a second terminal;
indication information for indicating a transmission of the SL PRS; or
configuration information for an SL MG of the second terminal.

In an embodiment, the second message includes any of the following:
a radio resource control message; or
a media access control-control element (MAC CE) message.

An embodiment of the present application further provides a first network device, including a memory, a transceiver and a processor,
where the memory is used for storing a computer program, the transceiver is used for receiving and sending data under control of the processor, and the processor is used for reading the computer program in the memory and performing the following operations:
receiving a second message sent from a first terminal, where the second message is used to request resource information of a sidelink positioning reference signal (SL PRS); and
scheduling transmission resources for the first terminal based on the second message.

In an embodiment, scheduling transmission resources for the first terminal based on the second message includes:
determining the resource information of the SL PRS based on the second message; and
scheduling, based on the resource information of the SL PRS, resources other than time-frequency resources or time domain resources for receiving the SL PRS for the first terminal to send sidelink data to a second terminal.

An embodiment of the present application further provides an apparatus for resource scheduling and for use in a first terminal, the apparatus including:
an obtaining unit, used for obtaining first information, where the first information is used by a first network device to schedule transmission resources for the first terminal; and
a sending unit, used for sending a first message to the first network device, where the first message is used to indicate the first information.

An embodiment of the present application further provides an apparatus for resource scheduling and for use in a first network device, the apparatus including:
a second receiving unit, used for receiving a first message sent from a first terminal, where the first message is used to indicate first information; and
a first scheduling unit, used for scheduling transmission resources for the first terminal based on the first information.

An embodiment of the present application further provides an apparatus for resource scheduling and for use in a first terminal, the apparatus including:
a third sending unit, used for sending a second message to a first network device, where the second message is used to request resource information of a sidelink positioning reference signal (SL PRS).

An embodiment of the present application further provides an apparatus for resource scheduling and for use in a first network device, the apparatus including:
a fourth receiving unit, used for receiving a second message sent from a first terminal, where the second message is used to request resource information of a sidelink positioning reference signal (SL PRS); and
a second scheduling unit, used for scheduling transmission resources for the first terminal based on the second message.

An embodiment of the present application further provides a computer-readable storage medium storing a computer program, where the computer program causes a computer to perform the above method for resource scheduling performed by the first terminal, or perform the above method for resource scheduling performed by the first network device.

An embodiment of the present application further provides a communication device storing a computer program, where the computer program causes the communication device to perform the above method for resource scheduling performed by the first terminal, or perform the above method for resource scheduling performed by the first network device.

An embodiment of the present application further provides a processor-readable storage medium storing a computer program, where the computer program causes a processor to perform the above method for resource scheduling performed by the first terminal, or perform the above method for resource scheduling performed by the first network device.

An embodiment of the present application further provides a chip product storing a computer program, where the computer program causes the chip product to perform the above method for resource scheduling performed by the first terminal, or perform the above method for resource scheduling performed by the first network device.

In the methods and apparatuses for resource scheduling, devices, and a storage medium provided in the embodiments of the present application, the first terminal indicates the first information to the first network device after obtaining the first information, and then the first network device may avoid scheduling the SL sending resources and/or air interface transmission resources for the first terminal on the time-frequency resources or time domain resources for receiving SL PRS, which avoids the problem of data packet loss or inability to send due to simultaneous SL PRS measurement and data transmission by the terminal, and ensures the success rate of data transmission.

### BRIEF DESCRIPTION OF THE DRAWINGS

In order to clearly illustrate the solutions disclosed in the embodiments of the present application or in the related art, the drawings used in the description of the embodiments or the related art are briefly described below. The drawings in the following description are only some embodiments of the present application, and other drawings may be obtained according to these drawings without any creative work for those skilled in the art.
FIG. 1 is a schematic diagram of a direct communication mode between terminals according to the related art;
FIG. 2 is a first schematic flowchart of a method for resource scheduling according to an embodiment of the present application;
FIG. 3 is a second schematic flowchart of a method for resource scheduling according to an embodiment of the present application;
FIG. 4 is a third schematic flowchart of a method for resource scheduling according to an embodiment of the present application;
FIG. 5 is a fourth schematic flowchart of a method for resource scheduling according to an embodiment of the present application;
FIG. 6 is a first schematic implementation diagram of a method for resource scheduling according to an embodiment of the present application;
FIG. 7 is a second schematic implementation diagram of a method for resource scheduling according to an embodiment of the present application;
FIG. 8 is a third schematic implementation diagram of a method for resource scheduling according to an embodiment of the present application;
FIG. 9 is a first schematic structural diagram of a first terminal according to an embodiment of the present application;
FIG. 10 is a first schematic structural diagram of a first network device according to an embodiment of the present application;
FIG. 11 is a second schematic structural diagram of a first terminal according to an embodiment of the present application;
FIG. 12 is a second schematic structural diagram of a first network device according to an embodiment of the present application;
FIG. 13 is a first schematic structural diagram of an apparatus for resource scheduling according to an embodiment of the present application;
FIG. 14 is a second schematic structural diagram of an apparatus for resource scheduling according to an embodiment of the present application;
FIG. 15 is a third schematic structural diagram of an apparatus for resource scheduling according to an embodiment of the present application; and
FIG. 16 is a fourth schematic structural diagram of an apparatus for resource scheduling according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

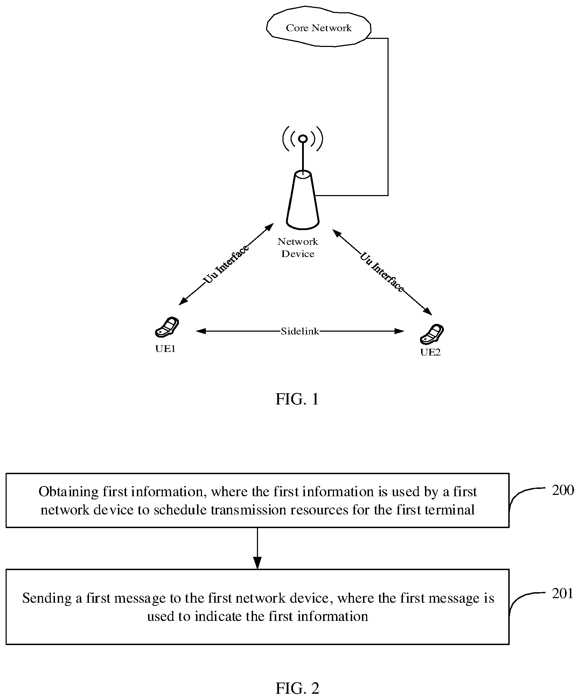

FIG. 1 is a schematic diagram of a direct communication mode between terminals according to the related art. As shown in FIG. 1, direct communication refers to a way in which neighboring terminals may perform data transmission within a close range through direct communication link. The radio interface corresponding to the direct communication link is called a direct communication interface, also known as sidelink interface, SL interface, or PC5 interface.

FIG. 2 is a first schematic flowchart of a method for resource scheduling according to an embodiment of the present application, where the method is performed by a first terminal. As shown in FIG. 2, the method includes the following steps:
step 200: obtaining first information, where the first information is used by a first network device to schedule transmission resources for the first terminal; and
step 201: sending a first message to the first network device, where the first message is used to indicate the first information.

In an embodiment, the first terminal may be any terminal, which is not limited herein. For example, the first terminal may be a terminal that receives sidelink positioning reference signal (SL PRS), i.e. a terminal that measures SL PRS, or it may be a terminal that sends SL PRS.

In an embodiment, the first network device may be a serving network device for the first terminal, such as a serving base station of the first terminal.

In case that the terminals use sidelink for positioning between each other, the receiving terminal cannot simultaneously perform transmission and reception on other SL channels when receiving SL PRS, and even cannot send data on an air interface (Uu interface). In the embodiments of the present application, in order to avoid the problem of data packet loss or inability to send due to simultaneous SL PRS measurement and data transmission performed by the terminal, the first terminal indicates the first information to the first network device after obtaining the first information, where the first information is used by the first network device to schedule transmission resources for the first terminal.

In an embodiment, obtaining the first information by the first terminal may include: receiving the first information sent from a second terminal. In various embodiments of the present application, the second terminal may refer to a corresponding terminal that establishes an SL connection with the first terminal, which is not described again in the present application. For example, the first terminal is a terminal that receives SL PRS, and the second terminal may be a terminal that sends SL PRS; or the first terminal is a terminal that sends SL PRS, and the second terminal may be a terminal that receives SL PRS.

In an embodiment, the first information may include resource information of SL PRS or configuration information for a sidelink measurement gap (SL MG) of the second terminal.

In an embodiment, the resource information of the SL PRS sent from the second terminal to the first terminal may be obtained by the second terminal requesting the serving network device for the second terminal.

In an embodiment, in case that the second terminal requests the resource information of the SL PRS from the serving network device for the second terminal, a request message may carry one or more pieces of the following information
(1) a sidelink identifier of the first terminal and/or the second terminal, such as a layer 2 identifier (L2 ID) of the first terminal and/or the second terminal;
(2) indication information for indicating a transmission of the SL PRS, where the indication information may be used to indicate that the second terminal is a terminal sending SL PRS; or
(3) configuration information for an SL MG of the first terminal.

In an embodiment, in case that the second terminal requests the resource information of the SL PRS from the serving network device for the second terminal, a request message may include any of the following messages.

### (1) A radio resource control (RRC) message

For example, the RRC message may be a *SidelinkUEinformationNR* (SUI) message, a *UEAssistanceInformation* (UAI) message, a *LocationMeasurementIndication* message, an *RRCSetupRequest* message, an *RRCSetupComplete* message, an *RRCResumeRequest* message, an *RRCResumeRequest1* message, an *RRCResumeComplete* message, an *RRCReestablishmentRequest* message, an *RRCReestablishmentComplete* message, or other RRC messages, etc.

### (2) A media access control-control element (MAC CE) message

For example, the MAC CE message may be SL PRS request MAC CE or other MAC CE messages, etc.

In an embodiment, the configuration information for the SL MG of the second terminal may be configured by the serving network device for the second terminal for the second terminal based on the resource information of the SL PRS reported from the second terminal.

In an embodiment, the resource information of the SL PRS may include one or more of the following.
(1) A positioning resource identifier of the SL PRS, which may be used to identify positioning resources for the SL PRS.
(2) Frequency domain resource information of the SL PRS, which may be used to indicate frequency domain resources for the SL PRS.
(3) Time domain resource information of the SL PRS, which may be used to indicate time domain resources for the SL PRS.
(4) A period of the SL PRS.
(5) A resource period type of the SL PRS. For example, the resource period type may include aperiodic (single), semi persistent (including period and offset, duration, the number of symbols, etc.), periodic (including period and offset, etc.), and corresponding spatial mapping relationship, etc.
   In an embodiment, the spatial mapping relationship corresponding to the SL PRS may include the spatial mapping relationship between the SL PRS and a synchronization signal block (SSB), a channel state information-reference signal (CSI-RS), a sidelink synchronization signal (SLSS), or other resources.
(6) A resource type of the SL PRS, for example, which indicates that the resource information of a SL PRS identifier corresponds to a sidelink channel state information-reference signal (SL CSI-RS) resource index or a SL PRS specific signal resource index.
(7) A resource bandwidth part (BWP) identifier of the SL PRS, which may be used to indicate the BWP where the SL PRS is located, and the number of the BWP may be one or more.
(8) Quasi co-location (QCL) information of the SL PRS.
(9) Activation time and/or duration of the SL PRS.
(10) a valid duration of the SL PRS.

In an embodiment, the configuration information for the SL MG of the second terminal may include one or more of the following:
(1) a frequency point where the SL PRS locates;
(2) a measurement period and offset of the SL PRS;
(3) a measurement duration of the SL PRS; or
(4) a valid duration of the SL MG.

In an embodiment, after receiving the first message, the first network device may schedule the transmission resources for the first terminal based on the first information indicated in the first message. In an embodiment, the transmission resources for the first terminal may include SL sending resources and/or air interface transmission (including uplink transmission and/or downlink transmission) resources.

For example, scheduling, by the first network device, the transmission resources for the first terminal may include one or any combination of the following operations:
(1) avoiding time-frequency resources for receiving SL PRS or time domain resources (slots or symbols) for receiving SL PRS reported from the first terminal in case of scheduling SL sending resources of the first terminal;
(2) avoiding time-frequency resources for receiving SL PRS or time domain resources (slots or symbols) for receiving SL PRS reported from the first terminal in case of scheduling Uu (uplink and/or downlink) resources of the first terminal;
(3) configuring SL MG for the first terminal based on the resource information of the SL PRS reported from the first terminal, and without scheduling SL sending resources and/or air interface transmission resources for the first terminal within the SL MG of the first terminal;
(4) avoiding time-frequency resources for receiving SL PRS by the second terminal or time domain resources (slots or symbols) for receiving SL PRS by the second terminal in case of scheduling SL sending resources with the second terminal as a destination; or
(5) avoiding a time range of the SL MG of the second terminal based on the configuration information for the SL MG of the second terminal in case of scheduling SL sending resources with the second terminal as a destination.

In an embodiment, in case that the first message is used to indicate the resource information of the SL PRS, the first message may carry one or more pieces of the following information.
(1) Resource information of the SL PRS.
   In an embodiment, the resource information of the SL PRS sent from the first terminal to the first network device may be a universal set or a subset of the resource information of the SL PRS obtained by the first terminal from the second terminal.
(2) A resource information identifier of the SL PRS, which may be used to indicate the resource information of the SL PRS.
(3) A sidelink identifier of the first terminal and/or the second terminal. For example, the sidelink identifier may be a layer 2 identifier (L2 ID) of the first terminal and/or the second terminal.
(4) Indication information for indicating a reception of the SL PRS, where the indication information may be used to indicate that the first terminal is a terminal receiving the SL PRS.

In an embodiment, in case that the first message is used to indicate the configuration information for the SL MG of the second terminal, the first message may carry the configuration information for the SL MG of the second terminal.

In an embodiment, the first message may include any of the following.

### (1) A radio resource control (RRC) message

For example, the RRC message may be an SUI message, a UAI message, a *LocationMeasurementIndication* message, an *RRCSetupRequest* message, an *RRCSetupComplete* message, an *RRCResumeRequest* message, an *RRCResumeRequest1* message, an *RRCResumeComplete* message, an *RRCReestablishmentRequest* message, an *RRCReestablishmentComplete* message, or other RRC messages, etc.

### (2) A Media access control-control element (MAC CE) message

For example, the MAC CE message may be SL PRS information MAC CE, SL MG MAC CE, or other MAC CE messages, etc.

In the method for resource scheduling provided by the embodiments of the present application, the first terminal indicates the first information to the first network device after obtaining the first information, and then the first network device may avoid scheduling the SL sending resources and/or air interface transmission resources for the first terminal on the time-frequency resources or time domain resources for receiving SL PRS, which avoids the problem of data packet loss or inability to send due to simultaneous SL PRS measurement and data transmission by the terminal, and ensures the success rate of data transmission.

In an embodiment, the method further includes:
receiving configuration information for the SL MG of the first terminal sent from the first network device.

In an embodiment, after the first terminal sends the first message to the first network device, the first network device may determine the configuration information for the SL MG of the first terminal based on the resource information of the SL PRS indicated by the first message.

For example, the first network device may determine the frequency point where the SL PRS is located based on the BWP where the SL PRS is located, the frequency domain resource information of the SL PRS, etc. For example, the first network device may determine the measurement period and offset of the SL PRS based on the period, resource period type, resource type, etc. of the SL PRS. For example, the first network device may determine the measurement duration of the SL PRS based on the time domain resource information of the SL PRS, the activation time and/or duration of the SL PRS, etc. For example, the first network device may determine the valid duration of the SL MG based on the time domain resource information of the SL PRS, the activation time and/or duration of the SL PRS, the valid duration of the SL PRS, etc.

Then, the first network device may send the configuration information for the SL MG of the first terminal to the first terminal.

In an embodiment, the configuration information for the SL MG of the first terminal may include one or more of the following:
(1) a frequency point where the SL PRS locates;
(2) a measurement period and offset of the SL PRS;
(3) a measurement duration of the SL PRS; or
(4) a valid duration of the SL MG.

In an embodiment, the first network device may send the configuration information for the SL MG of the first terminal to the first terminal through any of the following messages.

### (1) A radio resource control (RRC) message

For example, the RRC message may be an *RRCReestablishment* message, an *RRCReconfiguration* message, an *RRCResume* message, an *RRCSetup* message, an *RRCRelease* message, or other RRC messages.

### (2) A media access control-control element (MAC CE) message

For example, the MAC CE message may be an SL MG MAC CE message or other MAC CE messages.

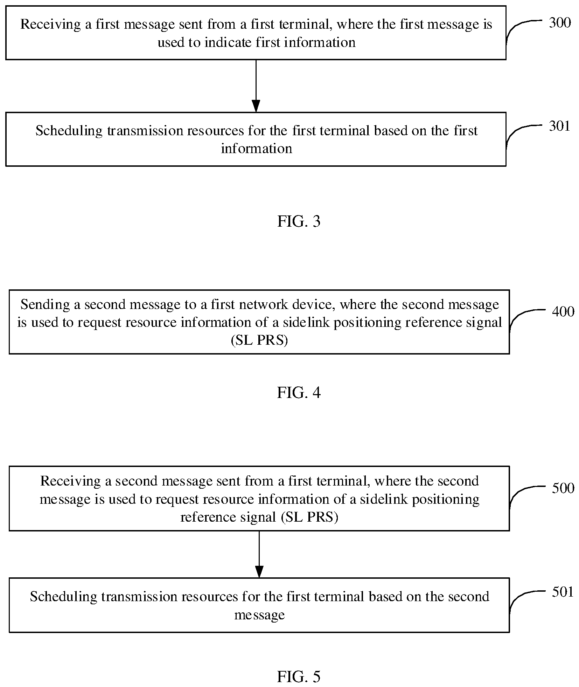

FIG. 3 is a second schematic flowchart of a method for resource scheduling according to an embodiment of the present application, where the method is performed by a first network device. As shown in FIG. 3, the method includes the following steps:
step 300: receiving a first message sent from a first terminal, where the first message is used to indicate first information; and
step 301: scheduling transmission resources for the first terminal based on the first information.

In an embodiment, the first terminal may be any terminal, which is not limited herein. For example, the first terminal may be a terminal that receives sidelink positioning reference signal (SL PRS), i.e. a terminal that measures SL PRS, or it may be a terminal that sends SL PRS.

In an embodiment, the first network device may be a serving network device for the first terminal, such as a serving base station of the first terminal.

In case that the terminals use sidelink for positioning between each other, the receiving terminal cannot simultaneously perform transmission and reception on other SL channels when receiving SL PRS, and even cannot send data on an air interface (Uu interface). In the embodiments of the present application, in order to avoid the problem of data packet loss or inability to send due to simultaneous SL PRS measurement and data transmission performed by the terminal, the first terminal may indicate the first information to the first network device after obtaining the first information, where the first information may be used by the first network device to schedule transmission resources for the first terminal.

In an embodiment, the first information may include resource information of the SL PRS or configuration information for a sidelink measurement gap (SL MG) of a second terminal.

In an embodiment, the resource information of the SL PRS may include one or more of the following.
(1) A positioning resource identifier of the SL PRS, which may be used to identify positioning resources for the SL PRS.
(2) Frequency domain resource information of the SL PRS, which may be used to indicate frequency domain resources for the SL PRS.
(3) Time domain resource information of the SL PRS, which may be used to indicate time domain resources for the SL PRS.
(4) A period of the SL PRS.
(5) A resource period type of the SL PRS. For example, the resource period type may include aperiodic (single), semi persistent (including period and offset, duration, the number of symbols, etc.), periodic (including period and offset, etc.), and corresponding spatial mapping relationship, etc.
   In an embodiment, the spatial mapping relationship corresponding to the SL PRS may include the spatial mapping relationship between the SL PRS and synchronization signal block (SSB), channel state information-reference signal (CSI-RS), sidelink synchronization signal (SLSS), or other resources.
(6) A resource type of the SL PRS, for example, which indicates that the resource information of a SL PRS identifier corresponds to a sidelink channel state information-reference signal (SL CSI-RS) resource index or a SL PRS specific signal resource index.
(7) A resource bandwidth part (BWP) identifier of the SL PRS, which may be used to indicate the BWP where the SL PRS is located, and the number of the BWP may be one or more.
(8) Quasi co-location (QCL) information of the SL PRS.
(9) Activation time and/or duration of the SL PRS.
(10) a valid duration of the SL PRS.

In an embodiment, the configuration information for the SL MG of the second terminal may include one or more of the following:
(1) a frequency point where the SL PRS locates;
(2) a measurement period and offset of the SL PRS;
(3) a measurement duration of the SL PRS; or
(4) a valid duration of the SL MG.

In an embodiment, after receiving the first message, the first network device may schedule the transmission resources for the first terminal based on the first information indicated in the first message. In an embodiment, the transmission resources for the first terminal may include SL sending resources and/or air interface transmission (including uplink transmission and/or downlink transmission) resources.

In an embodiment, scheduling transmission resources for the first terminal based on the first information includes:
scheduling transmission resources for the first terminal to send sidelink and/or perform air interface transmission based on the resource information of the SL PRS; or
scheduling transmission resources for the first terminal to send sidelink data to the second terminal based on the configuration information for the SL MG of the second terminal.

In an embodiment, in case that the first information includes the resource information of the SL PRS, the first network device may schedule transmission resources for the first terminal to send sidelink and/or perform air interface transmission based on the resource information of the SL PRS.

In an embodiment, in case that the first information includes the configuration information for the SL MG of the second terminal, the first network device may schedule transmission resources for the first terminal to send sidelink data to the second terminal based on the configuration information for the SL MG of the second terminal.

In an embodiment, scheduling transmission resources for the first terminal to send sidelink and/or perform air interface transmission based on the resource information of the SL PRS includes:
scheduling, based on the resource information of the SL PRS, resources other than time-frequency resources or time domain resources for receiving the SL PRS for the first terminal to send sidelink and/or perform air interface transmission.

For example, in case that the first network device schedules the resources for sending the SL of the first terminal, the time-frequency resources for receiving SL PRS or the time domain resources (slots or symbols) for receiving SL PRS reported from the first terminal may be avoided.

For example, in case that the first network device schedules the Uu (uplink and/or downlink) resources of the first terminal, the time-frequency resources for receiving SL PRS or the time domain resources (slots or symbols) for receiving SL PRS reported from the first terminal may be avoided.

In an embodiment, scheduling transmission resources for the first terminal to send sidelink and/or perform air interface transmission based on the resource information of the SL PRS includes:
determining the configuration information for the SL MG of the first terminal based on the resource information of the SL PRS; and
scheduling resources outside a time range of the SL MG for the first terminal to send sidelink and/or perform air interface transmission.

For example, the first network device may configure the SL MG for the first terminal based on the resource information of the SL PRS reported from the first terminal, and does not perform scheduling on the resources for sending the sidelink or air interface transmission resources for the first terminal within the SL MG of the first terminal.

In an embodiment, scheduling the transmission resources for the first terminal to send sidelink data to the second terminal based on the configuration information for the SL MG of the second terminal includes:
scheduling, based on the configuration information for the SL MG of the second terminal, resources outside a time range of the SL MG of the second terminal for the first terminal to send sidelink data to the second terminal.

For example, the time range of the SL MG of the second terminal may be avoided in case that the first network device schedules SL sending resources with the second terminal as a destination based on the configuration information for the SL MG of the second terminal reported from the first terminal.

In an embodiment, the method further includes:
determining the configuration information for the SL MG of the first terminal based on the resource information of the SL PRS; and
sending the configuration information for the SL MG of the first terminal to the first terminal.

In an embodiment, after the first terminal sends the first message to the first network device, the first network device may determine the configuration information for the SL MG of the first terminal based on the resource information of the SL PRS indicated by the first message.

For example, the first network device may determine the frequency point where the SL PRS is located based on the BWP where the SL PRS is located, the frequency domain resource information of the SL PRS, etc. For example, the first network device may determine the measurement period and offset of the SL PRS based on the period, resource period type, resource type, etc. of the SL PRS. For example, the first network device may determine the measurement duration of the SL PRS based on the time domain resource information of the SL PRS, the activation time and/or duration of the SL PRS, etc. For example, the first network device may determine the valid duration of the SL MG based on the time domain resource information of the SL PRS, the activation time and/or duration of the SL PRS, the valid duration of the SL PRS, etc.

Then, the first network device may send the configuration information for the SL MG of the first terminal to the first terminal.

In an embodiment, the configuration information for the SL MG of the first terminal may include one or more of the following:
(1) a frequency point where the SL PRS locates;
(2) a measurement period and offset of the SL PRS;
(3) a measurement duration of the SL PRS; or
(4) a valid duration of the SL MG.

FIG. 4 is a third schematic flowchart of a method for resource scheduling according to an embodiment of the present application, where the method is performed by a first terminal. As shown in FIG. 4, the method includes the following step:
step 400: sending a second message to a first network device, where the second message is used to request resource information of a sidelink positioning reference signal (SL PRS).

In an embodiment, the first terminal sends the second message to the first network device, where the second message is used to request resource information of the SL PRS, and after receiving the second message, the first network device knows that the first terminal needs to send the SL PRS, and then the first network device may send the resource information of the SL PRS to the first terminal and may schedule the transmission resources for the first terminal based on the resource information of the SL PRS.

For example, the time-frequency resources for receiving the SL PRS by the second terminal or the time domain resources (slots or symbols) for receiving the SL PRS by the second terminal may be avoided in case that the first network device schedules SL sending resources with the second terminal as a destination, where the second terminal may refer to a corresponding terminal that establishes an SL connection with the first terminal.

In an embodiment, the second message may carry one or more pieces of the following information:
(1) a sidelink identifier of the first terminal and/or the second terminal, such as a layer 2 identifier (L2 ID) of the first terminal and/or the second terminal;
(2) indication information for indicating a transmission of the SL PRS, where the indication information may be used to indicate that the first terminal is a terminal sending the SL PRS; or
(3) configuration information for the SL MG of the second terminal.

In an embodiment, the resource information of the SL PRS may include one or more of the following.
(1) A positioning resource identifier of the SL PRS, which may be used to identify positioning resources for the SL PRS.
(2) Frequency domain resource information of the SL PRS, which may be used to indicate frequency domain resources for the SL PRS.
(3) Time domain resource information of the SL PRS, which may be used to indicate time domain resources for the SL PRS.
(4) A period of the SL PRS.
(5) A resource period type of the SL PRS. For example, the resource period type may include aperiodic (single), semi persistent (including period and offset, duration, the number of symbols, etc.), periodic (including period and offset, etc.), and corresponding spatial mapping relationship, etc.
   In an embodiment, the spatial mapping relationship corresponding to the SL PRS may include the spatial mapping relationship between the SL PRS and synchronization signal block (SSB), channel state information-reference signal (CSI-RS), sidelink synchronization signal (SLSS), or other resources.
(6) A resource type of the SL PRS, for example, which indicates that the resource information of a SL PRS identifier corresponds to a sidelink channel state information-reference signal (SL CSI-RS) resource index or a SL PRS specific signal resource index.
(7) A resource bandwidth part (BWP) identifier of the SL PRS, which may be used to indicate the BWP where the SL PRS is located, and the number of the BWP may be one or more.
(8) Quasi co-location (QCL) information of the SL PRS.
(9) Activation time and/or duration of the SL PRS.
(10) a valid duration of the SL PRS.

In an embodiment, the configuration information for the SL MG of the second terminal may include one or more of the following:
(1) a frequency point where the SL PRS locates;
(2) a measurement period and offset of the SL PRS;
(3) a measurement duration of the SL PRS; or
(4) a valid duration of the SL MG.

In an embodiment, the second message may include any of the following.

### (1) A radio resource control (RRC) message

For example, the RRC message may be a *SidelinkUEinformationNR* (SUI) message, a *UEAssistanceInformation* (UAI) message, a *LocationMeasurementIndication* message, an *RRCSetupRequest* message, an *RRCSetupComplete* message, an *RRCResumeRequest* message, an *RRCResumeRequest1* message, an *RRCResumeComplete* message, an *RRCReestablishmentRequest* message, an *RRCReestablishmentComplete* message, or other RRC messages, etc.

### (2) A media access control-control element (MAC CE) message

For example, the MAC CE message may be an SL PRS request MAC CE or other MAC CE messages, etc.

In the method for resource scheduling provided by the embodiments of the present application, the first terminal requests resource information of the SL PRS from the first network device, and then the first network device may schedule the transmission resources for the first terminal based on the resource information of the SL PRS, which avoids the problem of data packet loss or inability to send due to simultaneous SL PRS measurement and data transmission by the terminal, and ensures the success rate of data transmission.

FIG. 5 is a fourth schematic flowchart of a method for resource scheduling according to an embodiment of the present application, where the method is performed by a first network device. As shown in FIG. 5, the method includes the following steps:
step 500: receiving a second message sent from a first terminal, where the second message is used to request resource information of a sidelink positioning reference signal (SL PRS); and
step 501: scheduling transmission resources for the first terminal based on the second message.

In an embodiment, the first terminal may send the second message to the first network device, where the second message is used to request the resource information of the SL PRS. After receiving the second message, the first network device may know that the first terminal needs to send the SL PRS, and then the first network device may send the resource information of the SL PRS to the first terminal, and may schedule the transmission resources for the first terminal based on the resource information of the SL PRS.

In an embodiment, scheduling transmission resources for the first terminal based on the second message includes:
determining the resource information of the SL PRS based on the second message; and
scheduling, based on the resource information of the SL PRS, resources other than time-frequency resources or time domain resources for receiving the SL PRS for the first terminal to send sidelink data to the second terminal.

For example, the time frequency resources for receiving the SL PRS by the second terminal or the time domain resources (slots or symbols) for receiving the SL PRS by the second terminal may be avoided in case that the first network device schedules SL sending resources with the second terminal as a destination, where the second terminal may refer to a corresponding terminal that establishes an SL connection with the first terminal.

In an embodiment, the resource information of the SL PRS may include one or more of the following.
(1) A positioning resource identifier of the SL PRS, which may be used to identify positioning resources for the SL PRS.
(2) Frequency domain resource information of the SL PRS, which may be used to indicate frequency domain resources for the SL PRS.
(3) Time domain resource information of the SL PRS, which may be used to indicate time domain resources for the SL PRS.
(4) A period of the SL PRS.
(5) A resource period type of the SL PRS. For example, the resource period type may include aperiodic (single), semi persistent (including period and offset, duration, the number of symbols, etc.), periodic (including period and offset, etc.), and corresponding spatial mapping relationship, etc.
   In an embodiment, the spatial mapping relationship corresponding to the SL PRS may include the spatial mapping relationship between the SL PRS and synchronization signal block (SSB), channel state information-reference signal (CSI-RS), sidelink synchronization signal (SLSS), or other resources.
(6) A resource type of the SL PRS, for example, which indicates that the resource information of a SL PRS identifier corresponds to a sidelink channel state information-reference signal (SL CSI-RS) resource index or a SL PRS specific signal resource index.
(7) A resource bandwidth part (BWP) identifier of the SL PRS, which may be used to indicate the BWP where the SL PRS is located, and the number of the BWP may be one or more.
(8) Quasi co-location (QCL) information of the SL PRS.
(9) Activation time and/or duration of the SL PRS.
(10) a valid duration of the SL PRS.

In the method for resource scheduling provided by the embodiments of the present application, the first terminal may request the resource information of SL PRS from the first network device, and then the first network device may schedule the transmission resources for the first terminal based on the resource information of the SL PRS, which avoids the problem of data packet loss or inability to send due to simultaneous SL PRS measurement and data transmission by the terminal, and ensures the success rate of data transmission.

The methods provided in various embodiments of the present application are based on the same conception, the implementation of each method may be referred to each other, and the repetition is not described again.

The following examples illustrate the methods provided in the above embodiments of the present application through specific application scenarios.

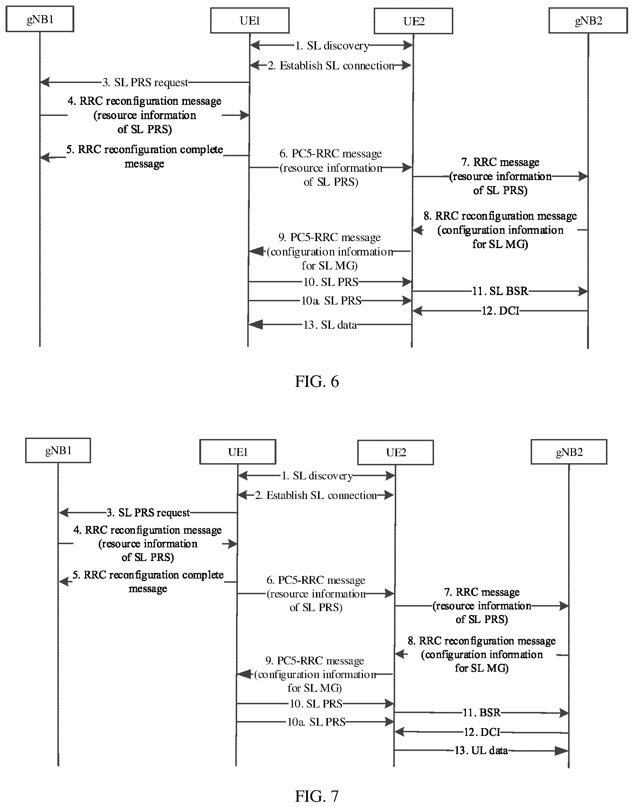

Embodiment 1: FIG. 6 is a first schematic implementation diagram of a method for resource scheduling according to an embodiment of the present application. As shown in FIG. 6, UE1 and UE2 perform SL communication and SL positioning, and the serving base station for UE1 is gNB1, the serving base station for UE2 is gNB2, gNB2 configures SL MG for UE2, UE2 has SL data to be sent, and gNB2 schedules SL sending resources for UE2 outside the SL MG of UE2. The main procedure includes the following steps.

Step 1: UE1 and UE2 discover each other through an SL discovery procedure.

Step 2: UE1 and UE2 establish an SL unicast connection.

Step 3: UE1 requests the resource information of SL PRS from gNB1, for example, UE1 uses a *SidelinkUEinformationNR* message to request the resource information of SL PRS, which carries the SL identifier of UE1 and/or UE2, and the SL PRS type is to send.

Step 4: gNB1 configures the resource information of SL PRS to UE1, for example, gNB1 uses an *RRCReconfiguration* message to send the resource information of SL PRS to UE1.

Step 5: UE1 sends an *RRCReconfigurationComplete* message to gNB1.

Step 6: UE1 sends the resource information of SL PRS to UE2 through a PC5-RRC message, for example, UE1 uses an *RRCReconfigurationSidelink* message to send the resource information of SL PRS to UE2, where the SL PRS is sent periodically.

Step 7: UE2 reports the received resource information of SL PRS to gNB2 through an RRC message, for example, a *SidelinkUEinformationNR* message is used, which includes the resource information of SL PRS and the SL identifier of UE2 and/or UE1, where the SL PRS type is to receive.

Step 8: gNB2 configures an SL MG for UE2 and sends the SL MG to UE2 through an *RRCReconfiguration* message.

Step 9: UE2 sends a PC5-RRC message to UE1, such as an *RRCReconfigurationSidelinkComplete* message, which may carry the configuration information for SL MG of UE2.

Step 10, Step 10a: UE1 periodically sends SL PRS to UE2 by using the SL PRS resources configured by gNB1, and UE2 receives the signal and performs SL PRS measurements.

Step 11: UE2 has SL data to be sent, and UE2 sends an SL buffer status report (BSR) to gNB2 to request SL sending resources.

Step 12: after receiving the request from UE2, gNB2 schedules SL resources through downlink control information (DCI), where the scheduled SL resources are located outside the SL MG of UE2.

Step 13: UE2 uses the SL resources in step 12 to send the SL data.

Embodiment 2: FIG. 7 is a second schematic implementation diagram of a method for resource scheduling according to an embodiment of the present application. As shown in FIG. 7, UE1 and UE2 perform SL communication and SL positioning, and the serving base station for UE1 is gNB1, the serving base station for UE2 is gNB2, gNB2 configures SL MG for UE2, UE2 has uplink (UL) data to be sent, and gNB2 schedules UL sending resources of UE2 outside the SL MG of UE2. The main procedure includes the following steps.

Step 1: UE1 and UE2 discover each other through an SL discovery procedure.

Step 2: UE1 and UE2 establish an SL unicast connection.

Step 3: UE1 requests the resource information of SL PRS from gNB1, for example, UE1 uses a *SidelinkUEinformationNR* message to request the resource information of SL PRS, which carries the SL identifier of UE1 and/or UE2, and the SL PRS type is to send.

Step 4: gNB1 configures the resource information of SL PRS to UE1, for example, gNB1 uses an *RRCReconfiguration* message to send the resource information of SL PRS to UE1.

Step 5: UE1 sends an *RRCReconfigurationComplete* message to gNB1.

Step 6: UE1 sends the resource information of SL PRS to UE2 through a PC5-RRC message, for example, UE1 uses an *RRCReconfigurationSidelink* message to send the resource information of SL PRS to UE2, where the SL PRS is sent periodically.

Step 7: UE2 reports the received resource information of SL PRS to gNB2 through an RRC message, for example, a *SidelinkUEinformationNR* message is used, which includes the resource information of SL PRS and the SL identifier of UE2 and/or UE1, where the SL PRS type is to receive.

Step 8: gNB2 configures an SL MG for UE2 and sends the SL MG to UE2 through an *RRCReconfiguration* message.

Step 9: UE2 sends a PC5-RRC message to UE1, such as an *RRCReconfigurationSidelinkComplete* message, which may carry the configuration information for SL MG of UE2.

Step 10, Step 10a: UE1 periodically sends SL PRS to UE2 by using the SL PRS resources configured by gNB1, and UE2 receives the signal and performs SL PRS measurements.

Step 11: UE2 has UL data to be sent, and UE2 sends a BSR to gNB2 to request UL sending resources.

Step 12: after receiving the request from UE2, gNB2 schedules UL resources through DCI, where the scheduled UL resources are located outside the SL MG of UE2.

Step 13: UE2 uses the UL resources in step 12 to send the UL data.

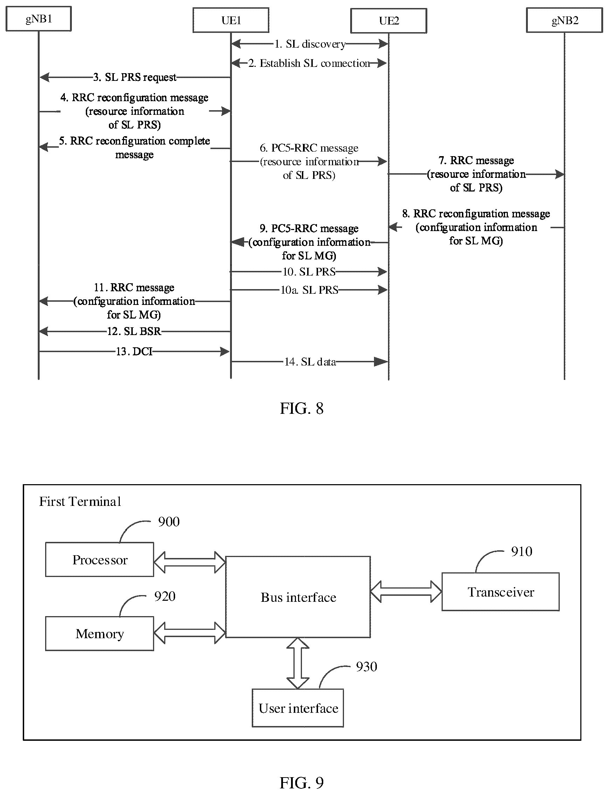

Embodiment 3: FIG. 8 is a third schematic implementation diagram of a method for resource scheduling according to an embodiment of the present application. As shown in FIG. 8, UE1 and UE2 perform SL communication and SL positioning, and the serving base station for UE1 is gNB1, the serving base station for UE2 is gNB2, gNB2 configures SL MG for UE2, UE1 has SL data to be sent to UE2, gNB1 schedules SL sending resources of UE1 outside the SL MG of UE2. The main procedure includes the following steps.

Step 1: UE1 and UE2 discover each other through an SL discovery procedure.

Step 2: UE1 and UE2 establish an SL unicast connection.

Step 3: UE1 requests the resource information of SL PRS from gNB1, for example, UE1 uses a *SidelinkUEinformationNR* message to request the resource information of SL PRS, which carries the SL identifier of UE1 and/or UE2, and the SL PRS type is to send.

Step 4: gNB1 configures the resource information of SL PRS to UE1, for example, gNB1 uses an *RRCReconfiguration* message to send the resource information of SL PRS to UE1.

Step 5: UE1 sends an *RRCReconfigurationComplete* message to gNB1.

Step 6: UE1 sends the resource information of SL PRS to UE2 through a PC5-RRC message, for example, UE1 uses an *RRCReconfigurationSidelink* message to send the resource information of SL PRS to UE2, where the SL PRS is sent periodically.

Step 7: UE2 reports the received resource information of SL PRS to gNB2 through an RRC message, for example, a *SidelinkUEinformationNR* message is used, which includes the resource information of SL PRS and the SL identifier of UE2 and/or UE1, where the SL PRS type is to receive.

Step 8: gNB2 configures an SL MG for UE2 and sends the SL MG to UE2 through an *RRCReconfiguration* message.

Step 9: UE2 sends a PC5-RRC message to UE1, such as an *RRCReconfigurationSidelinkComplete* message, which may carry the configuration information for SL MG of UE2.

Step 10, Step 10a: UE1 periodically sends SL PRS to UE2 by using the SL PRS resources configured by gNB1, and UE2 receives the signal and performs SL PRS measurements.

Step 11: UE1 reports the configuration information for the SL MG of UE2 to gNB1 through an RRC message, for example, a SUI message is sued.

Step 12: UE1 has SL data to be sent to UE2, UE1 sends an SL BSR to gNB1 to request SL sending resources, where the destination index (DST index) in the SL BSR indicates that the receiving UE is UE2.

Step 13: after receiving the request from UE1, gNB1 schedules SL resources through DCI, where the scheduled SL resources are located outside the SL MG of UE2.

Step 14: UE1 uses the SL resources in step 13 to send the SL data to UE2.

Embodiment 4: In this embodiment, UE1 and UE2 perform SL communication and SL positioning, and the serving base station for UE1 is gNB1, the serving base station for UE2 is gNB2. gNB2 does not configure SL MG for UE2 after receiving the resource information of SL PRS sent from UE2, but avoids the time domain location where the SL PRS resources reported from UE2 are located in case the gNB2 schedules resources.

For the scenario of Embodiment 1, the difference in procedure between this embodiment and the Embodiment 1 is that there is no step 8 in this embodiment, and during the SL resources scheduling in step 12, the SL resources scheduled by gNB2 cannot be located in slots or symbols where the SL PRS reported from UE2 is located.

For the scenario of Embodiment 2, the difference in procedure between this embodiment and the Embodiment 2 is that there is no step 8 in this embodiment, and during the UL resources scheduling in step 12, the UL resources scheduled by gNB2 cannot be located in slots or symbols where the SL PRS reported from UE2 is located.

For the scenario of Embodiment 3, the difference in procedure between this embodiment and the Embodiment 3 is that there are no step 8 and step 11 in this embodiment, and during the SL resources scheduling in step 13, the SL resources scheduled by gNB1 cannot be located at slots or symbols where the SL PRS configured by the gNB1 for UE1 is located.

The methods and apparatuses provided in various embodiments of the present application are based on the same conception. As the principles of solving problems by the methods and apparatuses are similar, the implementation of the apparatuses and methods may be referred to each other, and the same parts are not repeated.

FIG. 9 is a first schematic structural diagram of a first terminal according to an embodiment of the present application. As shown in FIG. 9, the first terminal includes a memory 920, a transceiver 910 and a processor 900, where the processor 900 and memory 920 may also be arranged separately in physical.

The memory 920 is used for storing a computer program, and the transceiver 910 is used for receiving and sending data under control of the processor 900.

In an embodiment, the transceiver 910 is used for sending and receiving data under control of the processor 900.

In FIG. 9, a bus architecture may include any number of interconnected buses and bridges, which are linked together through various circuits of one or more processors represented by the processor 900 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 910 may include multiple elements, i.e., including a transmitter and a receiver, units for providing communication with various other devices over transmission media including wireless channels, wired channels, fiber optic cables, and the like. For different user equipment, a user interface 930 may be an interface capable of externally or internally connecting the required equipment, and the connected equipment includes, but not limited to, a small keypad, a display, a speaker, a microphone, a joystick, and the like.

The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic device (CPLD), the processor may also use a multi-core architecture.

The processor 900 calls the computer program stored in the memory 920 to execute any of the methods performed by the first terminal provided by the embodiments of the present application in accordance with the obtained executable instructions. For example, the method includes: obtaining first information, where the first information is used by a first network device to schedule transmission resources for the first terminal; and sending a first message to the first network device, where the first message is used to indicate the first information.

In an embodiment, the first information includes resource information of a sidelink positioning reference signal (SL PRS) or configuration information for a sidelink measurement gap (SL MG) of a second terminal.

In an embodiment, obtaining the first information includes:
receiving the first information sent from a second terminal.

In an embodiment, the method further includes:
receiving configuration information for an SL MG of the first terminal sent from the first network device.

In an embodiment, in case that the first message is used to indicate the resource information of the SL PRS, the first message carries one or more pieces of the following information:
resource information of the SL PRS;
resource information identifier of the SL PRS;
sidelink identifier of the first terminal and/or the second terminal; or
indication information for indicating a reception of the SL PRS.

In an embodiment, the resource information of the SL PRS includes one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

In an embodiment, the configuration information for the SL MG of the second terminal includes one or more of the following:
a frequency point where the SL PRS locates;
a measurement period and offset of the SL PRS;
a measurement duration of the SL PRS; or
a measurement valid duration of the SL PRS.

In an embodiment, the first message includes any of the following:
a radio resource control message; or
a media access control-control element (MAC CE) message.

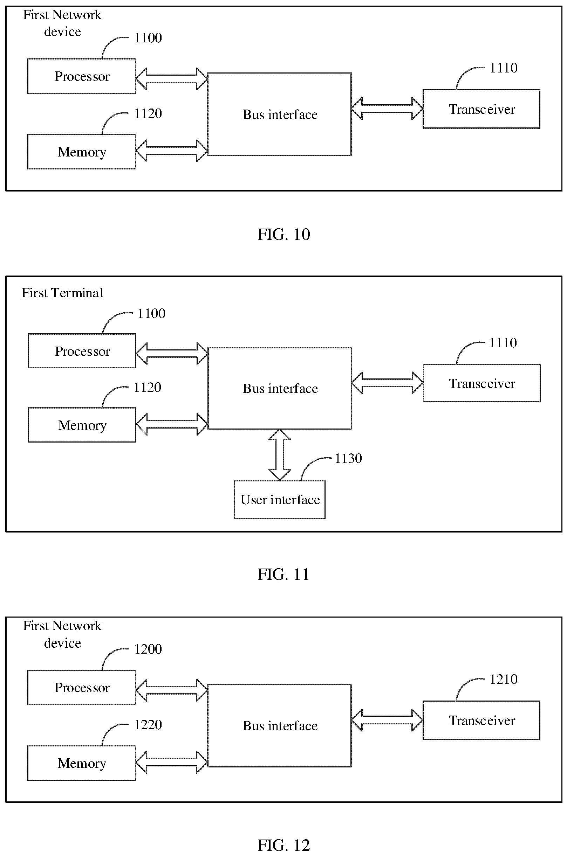

FIG. 10 is a first schematic structural diagram of a first network device according to an embodiment of the present application. As shown in FIG. 10, the first network device includes a memory 1020, a transceiver 1010 and a processor 1000, where the processor 1000 and the memory 1020 may also be arranged separately in physical.

The memory 1020 is used for storing a computer program, and the transceiver 1010 is used for receiving and sending data under control of the processor 1000.

In an embodiment, the transceiver 1010 is used for sending and receiving data under control of the processor 1000.

In FIG. 10, a bus architecture may include any number of interconnected buses and bridges, which are linked together through various circuits of one or more processors represented by the processor 1000 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1010 may include multiple elements, i.e., including a transmitter and a receiver, units for providing communication with various other devices over transmission media including wireless channels, wired channels, fiber optic cables, and the like.

The processor 1000 is responsible for managing the bus architecture and general processing, and the memory 1020 may store data used by the processor 1000 when performing operations.

The processor 1000 may be a central processing unit (CPU), an application specific integrated circuit (ASIC), a field-programmable gate array (FPGA), or a complex programmable logic device (CPLD), the processor may also use a multi-core architecture.

The processor 1000 calls the computer program stored in the memory 1020 to execute any of the methods performed by the first network device provided by the embodiments of the present application in accordance with the obtained executable instructions. For example, the method includes: receiving a first message sent from a first terminal, where the first message is used to indicate first information; and scheduling transmission resources for the first terminal based on the first information.

In an embodiment, the first information includes resource information of a sidelink positioning reference signal (SL PRS) or configuration information for a sidelink measurement gap (SL MG) of a second terminal.

In an embodiment, scheduling transmission resources for the first terminal based on the first information includes:
scheduling transmission resources for the first terminal to send sidelink and/or perform air interface transmission based on the resource information of the SL PRS; or
scheduling transmission resources for the first terminal to send sidelink data to the second terminal based on the configuration information for the SL MG of the second terminal.

In an embodiment, scheduling transmission resources for the first terminal to send sidelink and/or perform air interface transmission based on the resource information of the SL PRS includes:
scheduling, based on the resource information of the SL PRS, resources other than time-frequency resources or time domain resources for receiving the SL PRS for the first terminal to send sidelink and/or perform air interface transmission.

In an embodiment, scheduling transmission resources for the first terminal to send sidelink and/or perform air interface transmission based on the resource information of the SL PRS includes:
determining configuration information for an SL MG of the first terminal based on the resource information of the SL PRS; and
scheduling resources outside a time range of the SL MG of the first terminal for the first terminal to send sidelink and/or perform air interface transmission.

In an embodiment, scheduling the transmission resources for the first terminal to send sidelink data to the second terminal based on the configuration information for the SL MG of the second terminal includes:
scheduling, based on the configuration information for the SL MG of the second terminal, resources outside a time range of the SL MG of the second terminal for the first terminal to send sidelink data to the second terminal.

In an embodiment, the method further includes:
determining configuration information for an SL MG of the first terminal based on the resource information of the SL PRS; and
sending the configuration information for the SL MG of the first terminal to the first terminal.

FIG. 11 is a second schematic structural diagram of a first terminal according to an embodiment of the present application. As shown in FIG. 11, the first terminal includes a memory 1120, a transceiver 1110 and a processor 1100, where the processor 1100 and the memory 1120 may also be arranged separately in physical.

The memory 1120 is used for storing a computer program, and the transceiver 1110 is used for receiving and sending data under control of the processor 1100.

In an embodiment, the transceiver 1110 is used for sending and receiving data under control of the processor 1100.

In FIG. 11, a bus architecture may include any number of interconnected buses and bridges, which are linked together through various circuits of one or more processors represented by the processor 1100 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1110 may include multiple elements, i.e., including a transmitter and a receiver, units for providing communication with various other devices over transmission media including wireless channels, wired channels, fiber optic cables, and the like. For different user equipment, a user interface 1130 may be an interface capable of externally or internally connecting the required equipment, and the connected equipment includes, but not limited to, a small keypad, a display, a speaker, a microphone, a joystick, and the like.

The processor 1100 is responsible for managing the bus architecture and general processing, and the memory 1120 may store data used by the processor 1100 when performing operations.

The processor 1100 may be a central processing unit (CPU), an application specific integrated circuit (ASIC), a field-programmable gate array (FPGA), or a complex programmable logic device (CPLD), the processor may also use a multi-core architecture.

The processor 1100 calls the computer program stored in the memory 1120 to execute any of the methods performed by the first terminal provided by the embodiments of the present application in accordance with the obtained executable instructions. For example, the method includes: sending a second message to a first network device, where the second message is used to request resource information of a sidelink positioning reference signal (SL PRS).

In an embodiment, the second message carries one or more pieces of the following information:
sidelink identifier of the first terminal and/or a second terminal;
indication information for indicating a transmission of the SL PRS; or
configuration information for an SL MG of the second terminal.

In an embodiment, the second message includes any of the following:
a radio resource control message; or
a media access control-control element (MAC CE) message.

FIG. 12 is a second schematic structural diagram of a first network device according to an embodiment of the present application. As shown in FIG. 12, the first network device includes a memory 1220, a transceiver 1210 and a processor 1200, where the processor 1200 and the memory 1220 may also be arranged separately in physical.

The memory 1220 is used for storing a computer program, and the transceiver 1210 is used for receiving and sending data under control of the processor 1200.

In an embodiment, the transceiver 1210 is used for sending and receiving data under control of the processor 1200.

In FIG. 12, a bus architecture may include any number of interconnected buses and bridges, which are linked together through various circuits of one or more processors represented by the processor 1200 and one or more memories represented by the memory 1220. The bus architecture may also link together various other circuits, such as peripherals, voltage regulators, and power management circuits, etc., which are well known in the art, and therefore are not further described in the present application. The bus interface provides an interface. The transceiver 1210 may include multiple elements, i.e., including a transmitter and a receiver, units for providing communication with various other devices over transmission media including wireless channels, wired channels, fiber optic cables, and the like.

The processor 1200 is responsible for managing the bus architecture and general processing, and the memory 1220 may store data used by the processor 1200 when performing operations.

The processor 1200 may be a central processing unit (CPU), an application specific integrated circuit (ASIC), a field-programmable gate array (FPGA), or a complex programmable logic device (CPLD), the processor may also use a multi-core architecture.

The processor 1200 calls the computer program stored in the memory 1220 to execute any of the methods performed by the first network device provided by the embodiments of the present application in accordance with the obtained executable instructions. For example, the method includes: receiving a second message sent from a first terminal, where the second message is used to request resource information of a sidelink positioning reference signal (SL PRS); and scheduling transmission resources for the first terminal based on the second message

In an embodiment, scheduling transmission resources for the first terminal based on the second message includes:
determining the resource information of the SL PRS based on the second message; and
scheduling, based on the resource information of the SL PRS, resources other than time-frequency resources or time domain resources for receiving the SL PRS for the first terminal to send sidelink data to a second terminal.

It should be noted here that the above-mentioned terminals and network devices provided by the embodiments of the present application may implement all the method steps implemented by the above-mentioned method embodiments, and may achieve the same technical effects. The same parts and beneficial effects of the embodiments as the method embodiments are not repeated again

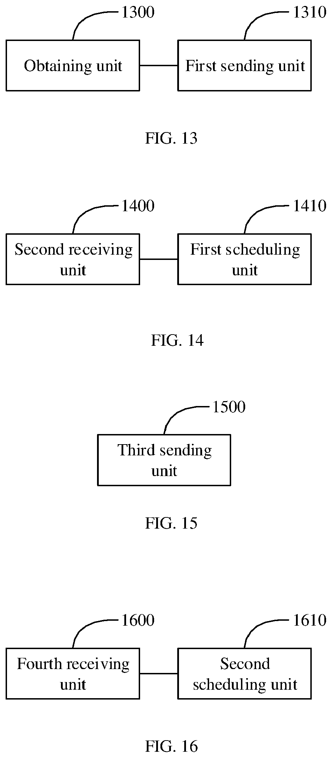

FIG. 13 is a first schematic structural diagram of an apparatus for resource scheduling according to an embodiment of the present application, where the apparatus is used in a first terminal. As shown in FIG. 13, the apparatus includes:
an obtaining unit 1300, used for obtaining first information, where the first information is used by a first network device to schedule transmission resources for the first terminal; and
a first sending unit 1310, used for sending a first message to the first network device, where the first message is used to indicate the first information.

In an embodiment, the first information includes resource information of a sidelink positioning reference signal (SL PRS) or configuration information for a sidelink measurement gap (SL MG) of a second terminal.

In an embodiment, obtaining the first information includes:
receiving the first information sent from a second terminal.

In an embodiment, the apparatus further includes a first receiving unit, where the first receiving unit is used for:
receiving configuration information for an SL MG of the first terminal sent from the first network device.

In an embodiment, in case that the first message is used to indicate the resource information of the SL PRS, the first message carries one or more pieces of the following information:
resource information of the SL PRS;
resource information identifier of the SL PRS;
sidelink identifier of the first terminal and/or the second terminal; or
indication information for indicating a reception of the SL PRS.

In an embodiment, the resource information of the SL PRS includes one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

In an embodiment, the configuration information for the SL MG of the second terminal includes one or more of the following:
a frequency point where the SL PRS locates;
a measurement period and offset of the SL PRS;
a measurement duration of the SL PRS; or
a measurement valid duration of the SL PRS.

In an embodiment, the first message includes any of the following:
a radio resource control message; or
a media access control-control element (MAC CE) message.

FIG. 14 is a second schematic structural diagram of an apparatus for resource scheduling according to an embodiment of the present application, where the apparatus is used in a first network device. As shown in FIG. 14, the apparatus includes:
a second receiving unit 1400, used for receiving a first message sent from a first terminal, where the first message is used to indicate first information; and
a first scheduling unit 1410, used for scheduling transmission resources for the first terminal based on the first information.

In an embodiment, the first information includes resource information of a sidelink positioning reference signal (SL PRS) or configuration information for a sidelink measurement gap (SL MG) of a second terminal.

In an embodiment, scheduling transmission resources for the first terminal based on the first information includes:
scheduling transmission resources for the first terminal to send sidelink and/or perform air interface transmission based on the resource information of the SL PRS; or
scheduling transmission resources for the first terminal to send sidelink data to the second terminal based on the configuration information for the SL MG of the second terminal.

In an embodiment, scheduling transmission resources for the first terminal to send sidelink and/or perform air interface transmission based on the resource information of the SL PRS includes:
scheduling, based on the resource information of the SL PRS, resources other than time-frequency resources or time domain resources for receiving the SL PRS for the first terminal to send sidelink and/or perform air interface transmission.

In an embodiment, scheduling transmission resources for the first terminal to send sidelink and/or perform air interface transmission based on the resource information of the SL PRS includes:
determining configuration information for an SL MG of the first terminal based on the resource information of the SL PRS; and
scheduling resources outside a time range of the SL MG of the first terminal for the first terminal to send sidelink and/or perform air interface transmission.

In an embodiment, scheduling the transmission resources for the first terminal to send sidelink data to the second terminal based on the configuration information for the SL MG of the second terminal includes:
scheduling, based on the configuration information for the SL MG of the second terminal, resources outside a time range of the SL MG of the second terminal for the first terminal to send sidelink data to the second terminal.

In an embodiment, the apparatus further includes:
a first determining unit, used for determining configuration information for an SL MG of the first terminal based on the resource information of the SL PRS; and
a second sending unit, used for sending the configuration information for the SL MG of the first terminal to the first terminal.

FIG. 15 is a third schematic structural diagram of an apparatus for resource scheduling according to an embodiment of the present application, where the apparatus is used in a first terminal. As shown in FIG. 15, the apparatus includes:
a third sending unit 1500, used for sending a second message to a first network device, where the second message is used to request resource information of a sidelink positioning reference signal (SL PRS).

In an embodiment, the second message carries one or more pieces of the following information:
sidelink identifier of the first terminal and/or a second terminal;
indication information for indicating a transmission of the SL PRS; or
configuration information for an SL MG of the second terminal.

In an embodiment, the second message includes any of the following:
a radio resource control message; or
a media access control-control element (MAC CE) message.

FIG. 16 is a fourth schematic structural diagram of an apparatus for resource scheduling according to an embodiment of the present application, where the apparatus is used in a first network device. As shown in FIG. 16, the apparatus includes:
a fourth receiving unit 1600, used for receiving a second message sent from a first terminal, where the second message is used to request resource information of a sidelink positioning reference signal (SL PRS); and
a second scheduling unit 1610, used for scheduling transmission resources for the first terminal based on the second message.

In an embodiment, scheduling transmission resources for the first terminal based on the second message includes:
determining the resource information of the SL PRS based on the second message; and
scheduling, based on the resource information of the SL PRS, resources other than time-frequency resources or time domain resources for receiving the SL PRS for the first terminal to send sidelink data to a second terminal.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

On the other hand, an embodiment of the present application further provides a computer readable storage medium storing a computer program that cause a computer to perform any of the methods for resource scheduling described in the various embodiments of the present application.

It should be noted here that the computer readable storage medium according to the embodiments of the present application may implement all the method steps implemented by the above method embodiments, and may achieve the same effect. The same parts and beneficial effects as the same method embodiments are not repeated here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for resource scheduling, performed by a first terminal, comprising:
obtaining first information, wherein the first information is used by a first network device to schedule transmission resources for the first terminal; and
sending a first message to the first network device, wherein the first message is used to indicate the first information.

2. The method of claim 1, wherein the first information comprises resource information of a sidelink positioning reference signal, SL PRS, or configuration information for a sidelink measurement gap, SL MG, of a second terminal.

3. The method of claim 1 or 2, wherein obtaining the first information comprises:
receiving the first information sent from a second terminal.

4. The method of claim 2, further comprising:
receiving configuration information for an SL MG of the first terminal sent from the first network device.

5. The method of claim 2, wherein in case that the first message is used to indicate the resource information of the SL PRS, the first message carries one or more pieces of the following information:
resource information of the SL PRS;
resource information identifier of the SL PRS;
sidelink identifier of the first terminal and/or the second terminal; or
indication information for indicating a reception of the SL PRS.

6. The method of claim 2 or 5, wherein the resource information of the SL PRS comprises one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

7. The method of claim 2, wherein the configuration information for the SL MG of the second terminal comprises one or more of the following:
a frequency point where the SL PRS locates;
a measurement period and offset of the SL PRS;
a measurement duration of the SL PRS; or
a measurement valid duration of the SL PRS.

8. The method of claim 1, wherein the first message comprises any of the following:
a radio resource control message; or
a media access control-control element, MAC CE, message.

9. A method for resource scheduling, performed by a first network device, comprising:
receiving a first message sent from a first terminal, wherein the first message is used to indicate first information; and
scheduling transmission resources for the first terminal based on the first information.

10. The method of claim 9, wherein the first information comprises resource information of a sidelink positioning reference signal, SL PRS, or configuration information for a sidelink measurement gap, SL MG, of a second terminal.

11. The method of claim 10, wherein scheduling the transmission resources for the first terminal based on the first information comprises:
scheduling transmission resources for the first terminal to send sidelink and/or perform air interface transmission based on the resource information of the SL PRS; or
scheduling transmission resources for the first terminal to send sidelink data to the second terminal based on the configuration information for the SL MG of the second terminal.

12. The method of claim 11, wherein scheduling transmission the resources for the first terminal to send sidelink and/or perform air interface transmission based on the resource information of the SL PRS comprises:
scheduling, based on the resource information of the SL PRS, resources other than time-frequency resources or time domain resources for receiving the SL PRS for the first terminal to send sidelink and/or perform air interface transmission.

13. The method of claim 11, wherein scheduling the transmission resources for the first terminal to send sidelink and/or perform air interface transmission based on the resource information of the SL PRS comprises:
determining configuration information for an SL MG of the first terminal based on the resource information of the SL PRS; and
scheduling resources outside a time range of the SL MG of the first terminal for the first terminal to send sidelink and/or perform air interface transmission.

14. The method of claim 11, wherein scheduling the transmission resources for the first terminal to send sidelink data to the second terminal based on the configuration information for the SL MG of the second terminal comprises:
scheduling, based on the configuration information for the SL MG of the second terminal, resources outside a time range of the SL MG of the second terminal for the first terminal to send sidelink data to the second terminal.

15. The method of claim 10, further comprising:
determining configuration information for an SL MG of the first terminal based on the resource information of the SL PRS; and
sending the configuration information for the SL MG of the first terminal to the first terminal.

16. A first terminal, comprising a memory, a transceiver and a processor,
wherein the memory is used for storing a computer program, the transceiver is used for receiving and sending data under control of the processor, and the processor is used for reading the computer program in the memory and performing the following operations:
obtaining first information, wherein the first information is used by a first network device to schedule transmission resources for the first terminal; and
sending a first message to the first network device, wherein the first message is used to indicate the first information.

17. The first terminal of claim 16, wherein the first information comprises resource information of a sidelink positioning reference signal, SL PRS, or configuration information for a sidelink measurement gap, SL MG, of a second terminal.

18. The first terminal of claim 16 or 17, wherein obtaining the first information comprises:
receiving the first information sent from a second terminal.

19. The first terminal of claim 17, wherein the operation further comprises:
receiving configuration information for an SL MG of the first terminal sent from the first network device.

20. The first terminal of claim 17, wherein in case that the first message is used to indicate the resource information of the SL PRS, the first message carries one or more pieces of the following information:
resource information of the SL PRS;
resource information identifier of the SL PRS;
sidelink identifier of the first terminal and/or the second terminal; or
indication information for indicating a reception of the SL PRS.

21. The first terminal of claim 17 or 20, wherein the resource information of the SL PRS comprises one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

22. The first terminal of claim 17, wherein the configuration information for the SL MG of the second terminal comprises one or more of the following:
a frequency point where the SL PRS locates;
a measurement period and offset of the SL PRS;
a measurement duration of the SL PRS; or
a measurement valid duration of the SL PRS.

23. The first terminal of claim 16, wherein the first message comprises any of the following:
a radio resource control message; or
a media access control-control element, MAC CE, message.

24. A first network device, comprising a memory, a transceiver and a processor,
wherein the memory is used for storing a computer program, the transceiver is used for receiving and sending data under control of the processor, and the processor is used for reading the computer program in the memory and performing the following operations:
receiving a first message sent from a first terminal, wherein the first message is used to indicate first information; and
scheduling transmission resources for the first terminal based on the first information.

25. The first network device of claim 24, wherein the first information comprises resource information of a sidelink positioning reference signal, SL PRS, or configuration information for a sidelink measurement gap, SL MG, of a second terminal.

26. The first network device of claim 25, wherein scheduling transmission resources for the first terminal based on the first information comprises:
scheduling transmission resources for the first terminal to send sidelink and/or perform air interface transmission based on the resource information of the SL PRS; or
scheduling transmission resources for the first terminal to send sidelink data to the second terminal based on the configuration information for the SL MG of the second terminal.

27. The first network device of claim 26, wherein scheduling the transmission resources for the first terminal to send sidelink and/or perform air interface transmission based on the resource information of the SL PRS comprises:
scheduling, based on the resource information of the SL PRS, resources other than time-frequency resources or time domain resources for receiving the SL PRS for the first terminal to send sidelink and/or perform air interface transmission.

28. The first network device of claim 26, wherein scheduling the transmission resources for the first terminal to send sidelink and/or perform air interface transmission based on the resource information of the SL PRS comprises:
determining configuration information for an SL MG of the first terminal based on the resource information of the SL PRS; and
scheduling resources outside a time range of the SL MG of the first terminal for the first terminal to send sidelink and/or perform air interface transmission.

29. The first network device of claim 26, wherein scheduling the transmission resources for the first terminal to send sidelink data to the second terminal based on the configuration information for the SL MG of the second terminal comprises:
scheduling, based on the configuration information for the SL MG of the second terminal, resources outside a time range of the SL MG of the second terminal for the first terminal to send sidelink data to the second terminal.

30. The first network device of claim 25, wherein the operation further comprises:
determining configuration information for an SL MG of the first terminal based on the resource information of the SL PRS; and
sending the configuration information for the SL MG of the first terminal to the first terminal.

31. An apparatus for resource scheduling and for use in a first terminal, comprising:
an obtaining unit, used for obtaining first information, wherein the first information is used by a first network device to schedule transmission resources for the first terminal; and
a sending unit, used for sending a first message to the first network device, wherein the first message is used to indicate the first information.

32. The apparatus of claim 31, wherein the first information comprises resource information of a sidelink positioning reference signal, SL PRS, or configuration information for a sidelink measurement gap, SL MG, of a second terminal.

33. The apparatus of claim 31 or 32, wherein obtaining the first information comprises:
receiving the first information sent from a second terminal.

34. The apparatus of claim 32, further comprising:
a first receiving unit, used for receiving configuration information for an SL MG of the first terminal sent from the first network device.

35. The apparatus of claim 32, wherein in case that the first message is used to indicate the resource information of the SL PRS, the first message carries one or more pieces of the following information:
resource information of the SL PRS;
resource information identifier of the SL PRS;
sidelink identifier of the first terminal and/or the second terminal; or
indication information for indicating a reception of the SL PRS.

36. The apparatus of claim 32 or 35, wherein the resource information of the SL PRS comprises one or more of the following:
a positioning resource identifier of the SL PRS;
frequency domain resource information of the SL PRS;
time domain resource information of the SL PRS;
a period of the SL PRS;
a resource period type of the SL PRS;
a resource type of the SL PRS;
a resource bandwidth part identifier of the SL PRS;
quasi co-location information of the SL PRS;
activation time and/or duration of the SL PRS; or
a valid duration of the SL PRS.

37. The apparatus of claim 32, wherein the configuration information for the SL MG of the second terminal comprises one or more of the following:
a frequency point where the SL PRS locates;
a measurement period and offset of the SL PRS;
a measurement duration of the SL PRS; or
a measurement valid duration of the SL PRS.

38. The apparatus of claim 31, wherein the first message comprises any of the following:
a radio resource control message; or
a media access control-control element, MAC CE, message.

39. An apparatus for resource scheduling and for use in a first network device, comprising:
a second receiving unit, used for receiving a first message sent from a first terminal, wherein the first message is used to indicate first information; and
a first scheduling unit, used for scheduling transmission resources for the first terminal based on the first information.

40. The apparatus of claim 39, wherein the first information comprises resource information of a sidelink positioning reference signal, SL PRS, or configuration information for a sidelink measurement gap, SL MG, of a second terminal.

41. The apparatus of claim 40, wherein scheduling transmission resources for the first terminal based on the first information comprises:
scheduling transmission resources for the first terminal to send sidelink and/or perform air interface transmission based on the resource information of the SL PRS; or
scheduling transmission resources for the first terminal to send sidelink data to the second terminal based on the configuration information for the SL MG of the second terminal.

42. The apparatus of claim 41, wherein scheduling transmission resources for the first terminal to send sidelink and/or perform air interface transmission based on the resource information of the SL PRS comprises:
scheduling, based on the resource information of the SL PRS, resources other than time-frequency resources or time domain resources for receiving the SL PRS for the first terminal to send sidelink and/or perform air interface transmission.

43. The apparatus of claim 41, wherein scheduling transmission resources for the first terminal to send sidelink and/or perform air interface transmission based on the resource information of the SL PRS comprises:
determining configuration information for an SL MG of the first terminal based on the resource information of the SL PRS; and
scheduling resources outside a time range of the SL MG of the first terminal for the first terminal to send sidelink and/or perform air interface transmission.

44. The apparatus of claim 41, wherein scheduling the transmission resources for the first terminal to send sidelink data to the second terminal based on the configuration information for the SL MG of the second terminal comprises:
scheduling, based on the configuration information for the SL MG of the second terminal, resources outside a time range of the SL MG of the second terminal for the first terminal to send sidelink data to the second terminal.

45. The apparatus of claim 40, further comprising:
a first determining unit, used for determining configuration information for an SL MG of the first terminal based on the resource information of the SL PRS; and
a second sending unit, used for sending the configuration information for the SL MG of the first terminal to the first terminal.

46. A computer-readable storage medium storing a computer program for causing a computer to perform the method of any of claims 1 to 8, or to perform the method of any of claims 9 to 15.
